## Europäisches Patentamt
## European Patent Office
## Office européen des brevets

(19)

(11) Veröffentlichungsnummer: **0 080 582**
**B1**

(12) **EUROPÄISCHE PATENTSCHRIFT**

(45) Veröffentlichungstag der Patentschrift:
**09.12.87**

(51) Int. Cl.⁴: **C 12 C 9/02, B 01 D 11/02**

(21) Anmeldenummer: **82109207.9**

(22) Anmeldetag: **05.10.82**

(54) **Verfahren zur Extraktion von pflanzlichen Naturstoffen.**

(30) Priorität: **11.11.81 DE 3144828**

(43) Veröffentlichungstag der Anmeldung:
**08.06.83 Patentblatt 83/23**

(45) Bekanntmachung des Hinweises auf die Patenterteilung:
**09.12.87 Patentblatt 87/50**

(84) Benannte Vertragsstaaten:
**AT BE CH DE FR GB LI LU NL**

(56) Entgegenhaltungen:
**FR - A - 2 096 201**
**FR - A - 2 367 822**
**FR - A - 2 429 255**
**US - A - 3 441 416**

(73) Patentinhaber: **SKW Trostberg Aktiengesellschaft,
Dr.-Albert-Frank-Strasse 32 Postfach 1150/1160,
D-8223 Trostberg (DE)**

(72) Erfinder: **Hallberg, Wilfried, Hochgernstrasse 22,
D-8223 Trostberg (DE)**
Erfinder: **Jekat, Herbert, Dr., Sonnenleite 8,
D-8223 Trostberg (DE)**
Erfinder: **Schütz, Erwin, Dr., Steiner Strasse 22,
D-8221 Palling (DE)**
Erfinder: **Stork, Kurt, Sebastianstrasse 3,
D-8071 Münchsmünster (DE)**
Erfinder: **Vollbrecht, Heinz-Rüdiger, Dr.,
Herzog-Nikolaus-Strasse 15, D-8221 Stein/Traun (DE)**

(74) Vertreter: **Weickmann, Heinrich, Dipl.-Ing. et al,
Patentanwälte Dipl.-Ing. H.Weickmann Dipl.-Phys.Dr.
K.Fincke Dipl.-Ing. F.A.Weickmann Dipl.-Chem. B. Huber
Dr.-Ing. H. Liska Dipl.-Phys.Dr. J. Prechtel
Postfach 860820, D-8000 München 86 (DE)**

## Beschreibung

Die Erfindung betrifft ein Verfahren zur Extraktion von pflanzlichen Naturstoffen, insbesondere von Hopfen.

Es ist seit langem bekannt, dass man Hopfeninhaltsstoffe durch Extraktion des Hopfens mit einem geeigneten Extraktionsmittel, wie organischen Lösungsmitteln, oder in jüngster Zeit auch Kohlendioxid in unterkritischem und/oder überkritischem Zustand gewinnen kann. Wegen des sehr niedrigen Schüttgewichts von 0,15 kg/l des vermahlenen Rohhopfens und mit dem Ziel, die hohen Investitionskosten für die Extraktionsdruckbehälter zu senken und andererseits die Transport- und Lagerkosten niedrig zu halten, ist es bereits bekannt, den für die Extraktion mit Kohlendioxid vorgesehenen Rohhopfen zu verdichten. Dies geschieht in der Weise, dass der Rohhopfen zunächst gemahlen und anschliessend durch Verpressen zu Pellets mit einem Durchmesser von etwa 6 mm und einer Länge von etwa 20 mm verarbeitet wird. Durch diese Massnahmen lässt sich eine Verdichtung um das 3- bis 4-fache erzielen. Diese kommerziell üblichen Hopfenpellets mit den angegebenen Abmessungen können jedoch nicht direkt für die Extraktion mit Kohlendioxid eingesetzt werden, da die Ausbeute insbesondere an den erwünschten Bitterstoffen zu niedrig ist. Aus der Monatsschrift für Brauerei (1980), Seite 107 ist es nun bekannt, dass man aus diesem Grund die Hopfenpellets zunächst vermahlt, um dann das dabei entstehende Pulver mit guten Ausbeuten extrahieren zu können. Dieses Verfahren erfordert jedoch wegen der zusätzlich notwendigen Mahlwerke einen höheren technischen Aufwand. Überdies leidet es an dem erheblichen Nachteil, dass der Hopfen durch das Vermahlen der Pellets erneut erwärmt wird, wodurch Verluste an den erwünschten α-Säuren auftreten, und dass die Anwendung einer Pulverschüttung in dem Extraktionsautoklaven die Ausbildung von Kanälen im Extraktionsbett begünstigt. Dies hat zur Folge, dass einerseits das Kohlendioxid durch diese Kanäle strömt, ohne dass es mit dem extrahierbaren Material beladen wird, während andererseits das Kohlendioxid an die dichter gepackten Stellen des Betts nicht gelangt, wodurch bei der Extraktion empfindliche Ausbeuteverluste an Hopfeninhaltsstoffen auftreten. Ähnliche Probleme können auch bei der Gewinnung von Inhaltsstoffen aus anderen Naturstoffen auftreten.

Zur Beseitigung der in dem Extraktionsbett auftretenden Kanäle ist bereits versucht worden, die Extraktionsautoklaven mit Rührwerken zu versehen, um eine gleichmässige Verteilung des Pulvers zu gewährleisten. Dies erfordert jedoch einen sehr grossen apparativen Aufwand, um für den Betrieb bei Drücken bis zu 500 bar eine einwandfreie Abdichtung des Rührwerks zu erreichen.

Demzufolge standen bisher lediglich zwei Alternativen zur Verfügung, nämlich entweder den gemahlenen Rohhopfen, dessen Schüttgewicht ähnlich ungünstig liegt wie beim Rohhopfen selbst, oder gemahlene Pellets für die Extraktion einzusetzen (J. Instr. Brew. Vol. 87 (1981) 24 bis 29, insbesondere 27, Spalte 1, 3. Absatz). Diese beiden Alternativen leiden jedoch an den oben beschriebenen Nachteilen der unvollständigen Extraktion durch Kanalbildung.

Die Aufgabe der vorliegenden Erfindung besteht somit darin, ein Verfahren zur Extraktion von Naturstoffen, insbesondere von Hopfen, bereitzustellen, das in einfacher Weise und ohne Beeinträchtigung der wertvollen Inhaltsstoffe eine möglichst vollständige Gewinnung der Inhaltsstoffe durch Extraktion mit Kohlendioxid ermöglicht.

Es hat sich nunmehr überraschenderweise gezeigt, dass ein Verfahren, bei dem Pellets, die nach dem Verpressen einen Durchmesser von 1,5 bis 4,0 mm, eine Länge von 1,5 bis 10 mm und ein Schüttgewicht von 0,4 bis 0,6 kg/l aufweisen, eingesetzt werden, diese Anforderungen erfüllt und eine wesentlich bessere Ausbeute der erwünschten Inhaltsstoffe bei der Extraktion mit Kohlendioxid ermöglicht.

Gegenstand der Erfindung ist daher ein Verfahren zur Extraktion von pflanzlichen Naturstoffen mittels Kohlendioxid, wobei die zu extrahierenden pflanzlichen Naturstoffe in Form von Pellets eingesetzt werden, dadurch gekennzeichnet, dass man Pellets mit einem Durchmesser von 1,5 bis 4,0 mm, einer Länge von 1,5 bis 10 mm und einem Schüttgewicht von 0,4 bis 0,6 kg/l verwendet. Hopfenpellets sind insbesondere solche aus Rohhopfenpulver. Die Naturstoffe werden vorzugsweise in getrockneter Form eingesetzt.

Es hat sich überraschenderweise gezeigt, dass die erfindungsgemäss eingesetzten Hopfenpellets der angegebenen Grösse sich ausserordentlich gut für die Kohlendioxidextraktion eignen. Dieser Befund steht im Gegensatz zu den bisherigen Erfahrungen auf diesem Gebiet. So wurde nämlich bislang die Meinung vertreten, dass Pellets dieser Abmessungen wegen Gefahr der Bildung von pulverförmigem Abrieb ungeeignet sind. Deshalb wurde bisher z.B. für Hopfenpellets ein Durchmesser von 5 bis 8 mm empfohlen (vgl. Brauwelt 116, Nr. 26 (1976) 1141 bis 1145). Ähnlich gute Ergebnisse werden überraschenderweise auch mit Pellets aus anderen Naturstoffprodukten, wie insbesondere aus Pflanzen, deren Blätter oder Blüten wertvolle Inhaltstoffe besitzen, wie z.B. aus Fichtennadeln, oder aus Beeren, wie z.B. Wacholderbeeren, erhalten, oder z.B. auch aus Pfeffer, Ölsaaten, Cardamon Annatto, Muskatnuss, Ingwer usw.

Darüber hinaus musste der Fachmann erwarten, dass bei der Herstellung von abriebfesten Hopfenpellets der erfindungsgemässen Abmessungen während des Pressvorgangs so hohe Temperaturen erreicht werden, dass eine Schädigung der Hopfeninhaltsstoffe erfolgt. Als weiteres Überraschungsmoment hat sich nun erwiesen, dass man durch eine geeignete Wahl des Presswegs beim Pelletiervorgang sowie des Durchmessers der Matrizenpresskanäle die thermische Beanspruchung des Hopfenmaterials sehr gering halten kann.

Die erfindungsgemäss eingesetzten Pellets werden vorzugsweise nach einem Verfahren zur Herstellung der Pellets durch Pelletieren von zerkleinerten, vorzugsweise gemahlenen Naturstoffen, wie z.B. von Rohhopfenpulver, hergestellt, welches dadurch gekennzeichnet ist, dass man den Pressvorgang unter Anwendung eines Presswegs von 5 bis 20 mm, vorzugsweise 8 bis 10 mm, und von Matrizenpresskanälen mit einem Durchmesser von 1,0 bis 5,0 mm, vorzugsweise von 2,2 bis 2,8 mm, bei einer Temperatur von nicht mehr als 50 °C bewirkt. Gemäss einer bevorzugten Ausführungsform führt man das Verpressen in der Weise durch, dass die beim Pelletieren auftretende Temperatur 45 °C nicht übersteigt. Diese erfindungsgemäss angewandten Temperaturen können gegebenenfalls durch geeignete Mittel, wie Kühlung mit einem Inertgas, Wasser oder Trockeneis, eingehalten werden. Die Herstellung der Pellets erfolgt in üblicher Weise unter Anwendung der üblichen Pelletpressen.

Gemäss einer besonders bevorzugten Ausführungsform der Erfindung vermischt man die zerkleinerten, vorzugsweise gemahlenen pflanzlichen Naturstoffe, und insbesondere das Hopfenpulver vor dem Pelletieren mit Kohlendioxidschnee. Dies sorgt während des Pelletiervorgangs für eine durchgehende Kühlung der Pellets. Es hat sich überraschenderweise gezeigt, dass bei dieser Ausführungsform des erfindungsgemässen Verfahrens zur Herstellung der Pellets gewisse Mengen an Kohlendioxid in den gebildeten Pellets eingeschlossen werden und während und nach dem Pelletiervorgang wieder in Form von Kohlendioxidgas aus den Pellets austreten. Hierbei eröffnet das Gas feine Kanäle in den Pellets, welche den nachfolgenden Extraktionsschritt in vorteilhafter Weise begünstigen, da auf diese Weise innerhalb der Pellets grosse, dem Kohlendioxidangriff zugängliche Oberflächen freigelegt werden.

In dieser Weise erhält man Pellets, wie z.B. Hopfenpellets, die direkt und mit guten Ausbeuten und relativ niedrigen Verweilzeiten mit Kohlendioxid extrahiert werden können und hohe Ausbeuten an unverfälschten Inhaltsstoffen, wie z.B. den Hopfeninhaltsstoffen ermöglichen.

Die erfindungsgemässen Pellets eignen sich daher sehr gut für ein Verfahren zur Gewinnung von pflanzlichen Naturstoffinhaltsstoffen, insbesondere von Hopfeninhaltsstoffen durch Extraktion der Pellets mit Kohlendioxid. In dieser Weise wird es möglich, eine bislang übliche zweite Vermahlung zu vermeiden, mit der die Pellets bisher in eine für die Extraktion geeignete Form gebracht werden.

Die folgenden Beispiele dienen der weiteren Erläuterung der Erfindung.

Beispiel 1

Man vermahlt Hallertauer Northern Brewer Doldenhopfen in einer Hammermühle und verpresst ihn anschliessend durch Pelletieren zu Pellets. Hierbei verwendet man eine Matrize mit einem Lochdurchmesser von 2,5 mm und arbeitet bei einem Pressweg von 10 mm. Nach dem Pelletiervorgang erhält man Pellets mit einer Temperatur von 50 °C und einem mittleren Durchmesser von 2,8 mm und einer mittleren Länge von 3,5 mm. Die Schüttdichte der Hopfenpellets beträgt 0,50 kg/l.

Beispiel 2

Man vermahlt Hallertauer Northern Brewer Doldenhopfen in einer Hammermühle und verpresst ihn anschliessend zu Pellets. Nach der Aufgabe des Hopfenpulvers auf die Pelletpresse wird Kohlendioxidschnee zugesetzt. Man arbeitet unter Anwendung einer Matrize mit einem Lochdurchmesser von 2,5 mm und unter Anwendung eines Presswegs von 10 mm. Nach der Pelletierung beträgt die Temperatur der Pellets 43 °C. Die hierbei erhaltenen Hopfenpellets besitzen einen mittleren Durchmesser von 3,0 mm und eine mittlere Länge von 3,5 mm und weisen eine Schüttdichte von 0,48 kg/l auf.

Auf die gleiche Weise wie in Beispiel 1 und 2 beschrieben können andere pflanzliche Naturstoffe, wie z.B. getrockneter schwarzer oder grüner Tee oder Estragon zu Pellets verarbeitet werden.

Beispiel 3

Zur Verdeutlichung der Extrahierbarkeit der erfindungsgemässen Hopfenpellets und herkömmlicher Hopfenpellets bzw. vermahlener Hopfenpellets wurden die folgenden Extraktionsversuche durchgeführt:

a) (Erfindung)

Man extrahiert 6,0 kg Hopfenpellets mit einem Durchmesser von 2,5 mm und einer durchschnittlichen Länge von 3,5 mm mit Kohlendioxid. Die Ausbeute an $\alpha$-Säuren liegt bei 96,7% der eingesetzten Menge.

b) (Vergleich)

Man extrahier 20 kg Hopfenpellets mit einem Durchmesser von 6 mm und einer durchschnittlichen Länge von 20 mm mit Kohlendioxid. Die in dieser Weise erzielte Ausbeute an $\alpha$-Säuren liegt bei 90,1% der eingesetzten Menge.

c) (Vergleich)

Man extrahiert 13,0 kg gemahlene Hopfenpellets mit Kohlendioxid. Die Ausbeute an $\alpha$-Säuren beträgt 93,9% der eingesetzten Menge.

Es ist somit aus den obigen Vergleichsversuchen ersichtlich, dass die erfindungsgemässen Hopfenpellets nicht nur eine bessere Gewinnung der enthaltenen Hopfeninhaltsstoffe ermöglichen als die herkömmlichen Hopfenpellets, sondern auch als die herkömmlichen vermahlenen Hopfenpellets, die eigentlich aufgrund der freigelegten Oberfläche des Hopfenmaterials eine bessere Extraktion ermöglichen sollten.

Beispiel 4

Man vermahlt ganze Fichtennadeln in einer Hammermühle und verpresst sie anschliessend zu Pellets, wobei man eine Matrize mit einem Lochdurchmesser von 2,8 mm verwendet und bei einem Pressweg von 10 mm arbeitet. Nach dem Pelletiervorgang erhält man Pellets mit einer Temperatur von 47 °C und einem mittleren Durchmesser von 2,9 mm und einer mittleren Länge von 3,5 mm. Die Schüttdichte der Fichtennadelnpellets beträgt 0,45 kg/l. Diese Pellets werden mit $CO_2$ extrahiert. Der Extrakt besitzt das unveränderte Aroma des Ausgangsmaterials während der Extraktionsrückstand praktisch geruchlos ist.

**Patentansprüche**

1. Verfahren zur Extraktion von pflanzlichen Naturstoffen mittels Kohlendioxid, wobei die zu extrahierenden pflanzlichen Naturstoffe in Form von Pellets eingesetzt werden, dadurch gekennzeichnet, dass man Pellets mit einem Durchmesser von 1,5 bis 4,0 mm, einer Länge von 1,5 bis 10 mm und einem Schüttgewicht von 0,4 bis 0,6 kg/l verwendet.

2. Verfahren nach Anspruch 1, dadurch gekennzeichnet, dass man Pellets mit einem Durchmesser von 2,0 bis 3,0 mm und einer Länge von 2,0 bis 4,0 mm verwendet.

3. Verfahren nach Anspruch 1 oder 2, dadurch gekennzeichnet, dass man Pellets aus Wacholderbeeren, Fichtennadeln oder Hopfen verwendet.

4. Verfahren nach einem der Ansprüche 1 bis 3, dadurch gekennzeichnet, dass man Pellets aus Rohhopfenpulver verwendet.

5. Verfahren zur Herstellung von Pellets für das Verfahren nach einem der Ansprüche 1 bis 4 durch Pelletieren von zerkleinerten, vorzugsweise gemahlenen pflanzlichen Naturstoffprodukten, dadurch gekennzeichnet, dass man den Pressvorgang unter Anwendung eines Presswegs von 5 bis 20 mm und von Matrizenpresskanälen mit einem Durchmesser von 1,0 bis 5,0 mm bei einer Temperatur von nicht mehr als 50 °C bewirkt.

6. Verfahren nach Anspruch 5, dadurch gekennzeichnet, dass man einen Pressweg von 8 bis 10 mm, einen Durchmesser der Matrizenpresskanäle von 2,2 bis 2,8 mm und eine Temperatur von nicht mehr als 45 °C anwendet.

7. Verfahren nach Anspruch 5 oder 6, dadurch gekennzeichnet, dass man die zerkleinerten, vorzugsweise gemahlenen pflanzlichen Naturstoffe vor dem Pelletieren mit Kohlendioxidschnee vermischt.

8. Verfahren nach einem der Ansprüche 5 bis 7, dadurch gekennzeichnet, dass man Hopfenpulver pelletiert.

**Claims**

1. Process for the extraction of natural vegetable materials by means of carbon dioxide, whereby the natural vegetable materials to be extracted are used in the form of pellets, characterised in that one uses pellets with a diameter of 1.5 to 4.0 mm., a length of 1.5 to 10 mm. and a bulk density of 0.4 to 0.6 kg./l.

2. Process according to claim 1, characterised in that one uses pellets with a diameter of 2.0 to 3.0 mm. and a length of 2.0 to 4.0 mm.

3. Process according to claim 1 or 2, characterised in that one uses pellets of juniper berries, pine needles or hops.

4. Process according to one of claims 1 to 3, characterised in that one uses pellets of crude hop powder.

5. Process for the production of pellets for the process according to one of claims 1 to 4 by pelletising of comminuted, preferably ground vegetable natural products, characterised in that one carries out the pressing procedure with the use of a pressing path of 5 to 20 mm. and of matrix pressing canals with a diameter of 1.0 to 5.0 mm. at a temperature of not more than 50 °C.

6. Process according to claim 5, characterised in that one uses a pressing path of 8 to 10 mm., a diameter of the matrix pressing canals of 2.2 to 2.8 mm. and a temperature of not more than 45 °C.

7. Process according to claim 5 or 6, characterised in that one mixes the comminuted, preferably ground natural vegetable materials with carbon dioxide snow before the pelleting.

8. Process according to one of claims 5 to 7, characterised in that one pelletises hop powder.

**Revendications**

1. Procédé pour l'extraction de substances végétales naturelles au moyen d'anhydride carbonique, dans lequel les produits végétaux naturels à soumettre à l'extraction sont utilisés sous la forme de pastilles, caractérisé en ce que l'on utilise des pastilles présentant un diamètre de 1,5 à 4,0 mm, une longueur de 1,5 à 10 mm et une densité apparente de 0,4 à 0,6 kg/l.

2. Procédé selon la revendication 1, caractérisé en ce que l'on utilise des pastilles présentant un diamètre de 2,0 à 3,0 mm et une longueur de 2,0 à 4,0 mm.

3. Procédé selon la revendication 1 ou 2, caractérisé en ce que l'on utilise des pastilles obtenues à partir de baies de genièvre, d'aiguilles de pin ou de houblon.

4. Procédé selon l'une quelconque des revendications précédentes, caractérisé en ce que l'on utilise des pastilles formées de poudre de houblon brut.

5. Procédé pour la fabrication de pastilles destinées au procédé selon l'une quelconque des revendications précédentes par la mise en forme de pastilles de produits végétaux naturels fragmentés, de préférence moulus, caractérisé en ce que l'on met en œuvre le processus de pressage en utilisant une course de pressage de 5 à 20 mm et des canaux presseurs de matrice d'un diamètre de 1,0 à 5,0 mm à une température n'excédant pas 50 °C.

6. Procédé selon la revendication 5, caractérisé en ce que l'on utilise une course de pressage de 8 à 10 mm, un diamètre des canaux presseurs de la matrice de 2,2 à 2,8 mm et une température n'excédant pas 45 °C.

7. Procédé selon la revendication 5 ou 6, caractérisé en ce que l'on mélange les produits végétaux naturels fragmentés, de préférence moulés, avec de la neige carbonique avant la mise en forme de pastilles.

8. Procédé selon l'une quelconque des revendications 5 à 7, caractérisé en ce que l'on met en forme de pastilles de la poudre de houblon.